**Europäisches Patentamt**

**European Patent Office**

**Office européen des brevets**

(11) Veröffentlichungsnummer: **0 215 199**
**A2**

(12) # EUROPÄISCHE PATENTANMELDUNG

(21) Anmeldenummer: **86107806.1**

(22) Anmeldetag: **07.06.86**

(51) Int. Cl.⁴: **G11B 15/665**

(30) Priorität: **11.09.85 DE 3532402**

(43) Veröffentlichungstag der Anmeldung:
**25.03.87 Patentblatt 87/13**

(84) Benannte Vertragsstaaten:
**CH DE FR GB IT LI**

(71) Anmelder: **GRUNDIG E.M.V.**
**Elektro-Mechanische Versuchsanstalt Max**
**Grundig holländ. Stiftung & Co. KG.**
**Kurgartenstrasse 37**
**D-8510 Fürth(DE)**

(72) Erfinder: **Bratenstein, Ernst**
**Taubenweg 26**
**D-8510 Fürth(DE)**
Erfinder: **Schmidt, Erhard**
**Wickenstrasse 46**
**D-8510 Fürth(DE)**

(54) **Vorrichtung zum An- und Abkoppeln von Steuerelementen in einem Video-Magnetbandgerät.**

(57) Es wird eine Vorrichtung zum An-und Abkoppeln von Steuerelementen, z. B. Bandführungselementen an ein Antriebselement in einem Video-Magnetbandgerät beschrieben, bei der ein Koppelstift, der als Bandführungselement ausgebildet ist, das Magnetband aus einer Bandkassette herauszieht und in Schrägspurführung um eine Kopftrommel schlingt. Der Koppelstift wird hierbei von einer drehbaren Steuerscheibe formschlüssig mitgenommen und während der Drehbewegung von dieser abgekoppelt und an ein um die Kopftrommel angeordnetes und feststehendes Gleitführungsteil angekoppelt.

FIG. 1

EP 0 215 199 A2

# VORRICHTUNG ZUM AN-UND ABKOPPELN VON STEUERELEMENTEN IN EINEM VIDEO-MAGNETBAND-GERÄT

Die Einrichtung betrifft eine Vorrichtung entsprechend dem Oberbegriff des Patentanspruchs 1.

Es sind magnetische Aufzeichnungs-und/oder Wiedergabegeräte bekannt, die insbesondere als Video-Magnetbandgeräte mit Schrägspuraufzeichnung arbeiten, und bei denen das Magnetband bekannterweise um eine rotierende Kopftrommel geführt wird. Zur Erzielung einer wenigstens teilweisen Umschlingung einer Kopftrommel mit einem Magnetband werden bewegliche Bandführungselemente verwendet. Das Magnetband wird bei Geräten dieser Art aus einer Bandkassette mit zwei Bandwickelspulen herausgezogen und in Schräglage um einen Teil der Kopftrommel gelegt. Hierfür sind bei bekannten Bandführungsvorrichtungen die Bandführungselemente bzw. Bandführungsstifte auf einem ringförmigen Träger angeordnet. Der Träger ist um die Kopftrommel gelegt und getrennt antreibbar.

Da das Magnetband in Form einer Schlaufe um die Kopftrommel gezogen wird, sind mehrere Bandführungsstifte erforderlich, damit vermieden wird, daß das Magnetband im Schlaufenbereich und im übrigen Führungsbereich übereinander zu liegen kommt. Die verschiedenen Bandführungsstifte nehmen daher während des Bandeinzugsvorganges im Bereich der Kopftrommel zwischen der Ausgangslage und der Endlage - (Band um die Kopftrommel geführt) verschiedene Abstandspositionen zueinander ein. Somit können nicht alle Bandführungsstifte einem Träger fest zugeordnet werden. Es ist daher bekannt, daß Bandführungsstifte auf mindestens zwei der Kopftrommel zugeordneten Trägern angeordnet sind und die Träger in verschiedene Endstellungen gedreht werden. Nachteilig ist hierbei, daß mehrere Träger für die benötigten Bandführungsstifte erforderlich sind, und daß die Träger nur durch einen getrennten und aufwendigen Antrieb oder durch eine Mitnahmekupplung in verschiedene Drehlagen zu verstellen sind.

Aufgabe der Erfindung ist es daher, eine Vorrichtung zum An-und Abkoppeln von Steuerelementen, insbesondere von Bandführungselementen an ein Antriebselement, zu schaffen, wobei wenigstens ein Bandführungselement an eine drehbare Steuerescheibe ohne zusätzliche Teile angekoppelt oder von dieser abgekoppelt wird und die Steuerscheibe weitere fest zugeordnete Bandführungselemente aufweist.

Diese Aufgabe wird erfindungsgemäß durch die im Kennzeichen des Patentanspruchs 1 angegebenen Merkmale gelöst.

Die Erfindung wird nachfolgend anhand der Zeichnungen erläutert.

Fig. 1 ist eine vereinfachte Draufsicht auf eine Kopftrommel mit einer Steuerscheibe zur Betätigung von Bandführungselementen sowie einer Kassette mit eingelegtem Magnetband eines Video-Magnetbandgerätes,

Fig. 2 ist eine Ansicht wie Fig. 1, jedoch mit aus der Kassette herausgezogenem und teilweise um die Kopftrommel geführtem Magnetband,

Fig. 3 ist eine vergrößerte Teil-Seitenansicht der Fig. 1 als Schnitt III-III eines Bandfürhungslementes, das in ein Gleitführungsteil eingreift und von einem Antriebselement mitgenommen wird.

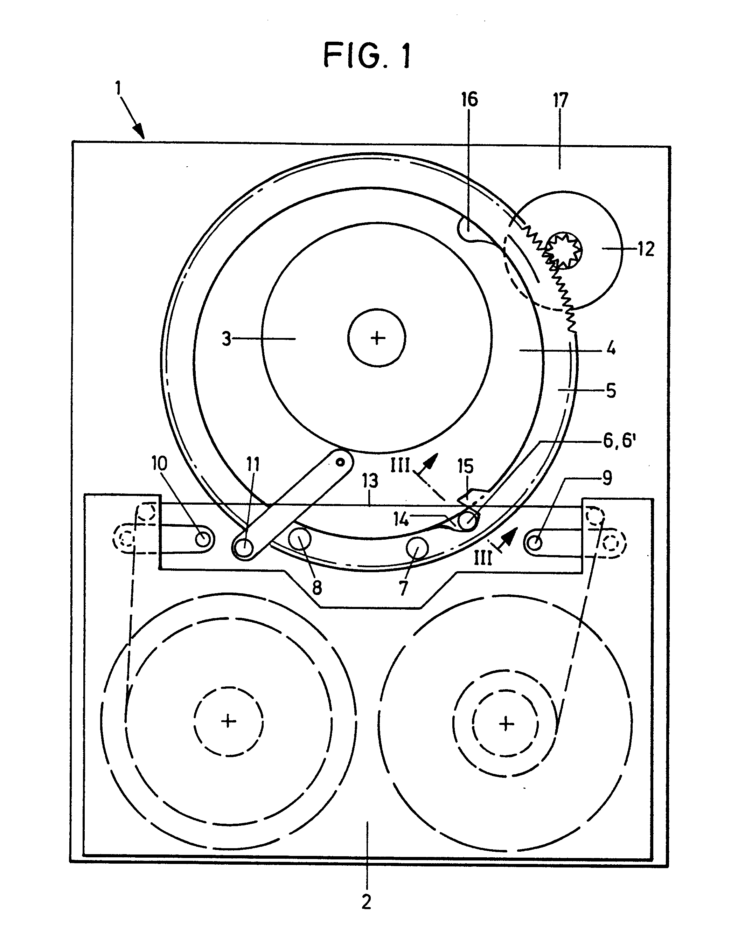

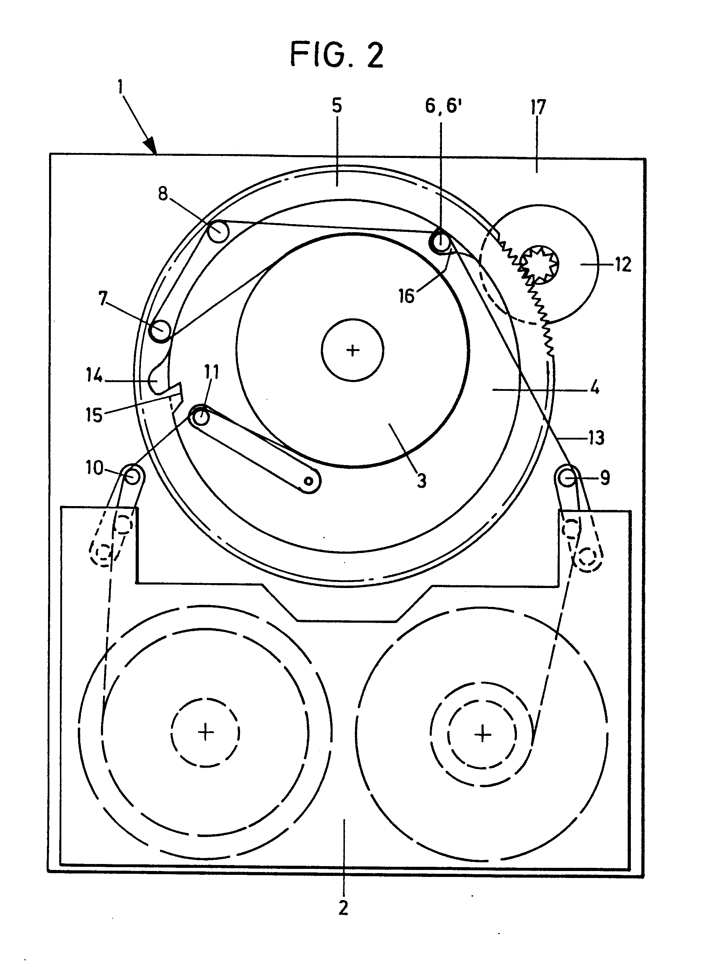

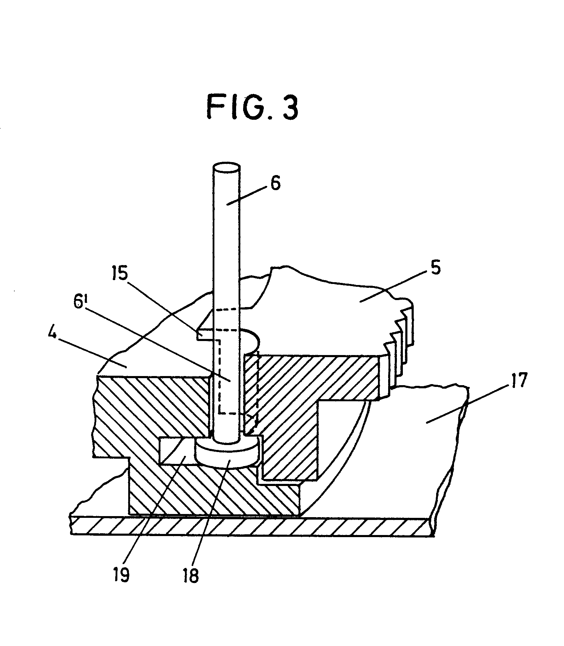

Die Figur 1 zeigt in vereinfachter Darstellung einen Teil eines Video-Magnetbandgerätes 1, von dem in grob schematisierter Weise eine Magnetbandkassette 2, eine Kopftrommel 3 mit zugeordnetem Gleitführungsteil 4, und eine ringförmig um die Kopftrommel drehbar angeordnete Steuerscheibe sowie verschiedene Bandführungselemente 6 bis 11 dargestellt ist. Die Steuerscheibe 5 weist einen Zahnkranz auf und wird über einen Motor 12 angetrieben. Alle Teile sind direkt oder über Steuerelemente auf einem Gerätechassis 17 montiert. Beim Auflegen der Kassette wird das Magnetband 13, das sich in der Kassette 2 befindet, von den Bandführungselementen hinterfaßt und kann von diesen aus der Kassette herausgezogen werden. Die Bandführungselemente sind vorzugsweise als senkrecht hochstehende Bandführungsstifte (siehe Fig. 3) ausgebildet, wobei die Bandführungslemente 7, 8 auf der Steuerscheibe 5 fest aufgesetzt sind, und die Führungselemente 9, 10, 11 je auf einem Hebel befestigt sind. Das Bandführungselement 6, das gleichzeitig als Koppelstift 6' ausgebildet ist, befindet sich während der Ausgangsstellung der Steuerscheibe 5 in einer Ausklinkung 14, die in der Steuerscheibe 5 eingebracht ist, wobei das Bandführungselement 6 in einer Führungsnut im Gleitführungsteil 4 geführt wird. Eine Führungsnase 15, die der Steuerscheibe 5 zugeordnet ist, greift teilweise um das Bandführungselement 6. Eine weitere Ausklinkung 16 befindet sich in dem Gleitführungsteil 4 und ist ähnlich ausgebildet wie die Ausklinkung in der Steuerscheibe 5. Wird nun die Steuerscheibe 5 in Pfeilrichtung gedreht, so wird das Magnetband 13 zuerst von dem Bandführungselement 6 erfaßt, aus der Kassette 2 herausgezogen und teilweise um die Kopftrommel 3 gelegt. Während des Drehvorganges der Steuerscheibe 5 wird das Bandführungselement 6 an einem Kreisbogenabschnitt am Gleitführungsteil entlang bewegt und trifft auf die Ausklinkung 16 im Gleitführungsteil 4. Durch entsprechende Ausbildung der Ausklinkungen 14 und 16 wird das Bandführungselement 6 von der Ausklinkung 14 heraus in die Ausklinkung 16 hineingedrückt und dort festgehalten. Die Steuerscheibe 5 dreht sich weiter und bringt die Bandführungselemente 7 und 8 in ihre Endposition (siehe Fig. 2).

Aus der Fig. 2 ist die Lage des aus der Kassette herausgezogenen Magnetbandes 13 bei Endstellung der Steuerscheibe 5 zu erkennen. Das Bandführungselement 6 verharrt in der Ausklinkung 16 des Gleitführungsteils 4 und die Bandführungselemente 7 und 8 auf der Steuerscheibe haben in der dargestellten Figur ihre Endlage eingenommen. Die Bandführungselemente 9, 10, 11, die je auf einem Schwenkhebel angeordnet sind, wurden in Richtung Kopftrommel verschwenkt. Zur Steuerung der Schwenkhebel für die Bandführungselemente 9, 10, 11 dient ebenfalls die Steuerscheibe 5. Soll nun das Magnetband 13 in die Kassette zurückgeführt werden, so ist die Steuerscheibe in entgegengesetzter Richtung zurückzudrehen und die Nase 15 der Steuerscheibe 5 erfaßt das Bandführungselement 6, das aus der Ausklinkung 16 des Gleitführungsteils herausgedrückt wird, und sich in der Ausklinkung 14 mit der Steuerscheibe zurück zur Ausgangsstellung bewegt.

In der Fig. 3 ist in einem vergrößert dargestellten Schnitt III-III, der durch das Gleitführungsteil 4 gelegt ist, ein Führungsbeispiel für die verschiebbare Lagerung des beweglichen Bandführungselements 6 aufgezeigt. Das Bandführungselement 6 ist als zylinderförmiger Koppelstift 6' ausgeführt und greift mittels eines Flansches 18 in eine Führungsnut 19 des Gleitführungsteils 4. Das Gleitführungsteil 4 ist fest mit dem Gerätechassis 17 verbunden. Durch entsprechend ausgebildete Stufen ist die Lage der Steuerscheibe 5 zum Gleitführungsteil 4 festgelegt und auf diesem drehbar befestigt.

**Ansprüche**

1. Vorrichtung zum An- und Abkoppeln von Steuerelementen, z. B. Bandführungselementen an ein Antriebselement in einem Video-Magnetbandgerät, das eine drehbare Kopftrommel mit zugeordneten Magnetköpfen aufweist, wobei das Magnetband aus einer Bandkassette herausgezogen in Schrägspurführung die Kopftrommel teilweise umschlingt und wenigstens ein Bandführungselement in ein um die Kopftrommel angeordnetes Gleitführungsteil (4) verschiebbar eingreift, sowie das Antriebselement vorzugsweise aus einer ringförmig um die Kopftrommel drehbar angeordneten Steuerscheibe (5) besteht, **dadurch gekennzeichnet**, daß ein Koppelstift (6') (identisch mit Bandführungselement 6) in eine einseitig offene Ausklinkung (14) in der Steuerscheibe (5) formschlüssig eingreift und entlang einer feststehenden Führungsbahn (Führungsnut 19) am Gleitführungsteil (4) im Gerät geführt ist, daß durch Drehen der Steuerscheibe (5) der Koppelstift (6') an einer vorgegebenen Stelle von einer Ausklinkung (14) in der Steuerscheibe (5) in eine Ausklinkung (16) im feststehenden Gleitführungsteil (4) hineingedrückt und in dieser Lage durch die sich weiterdrehende Steuerscheibe (5) gesperrt wird, und daß durch Drehrichtungsänderung der Steuerscheibe der Koppelstift (6') in seine Ausgangslage zurückführbar ist.

2. Vorrichtung nach Anspruch 1, **dadurch gekennzeichnet**, daß der Koppelstift (6') als Bandführungselement (6) ausgebildet ist.

3. Vorrichtung nach den Ansprüchen 1 und 2, **dadurch gekennzeichnet**, daß der Koppelstift (6') in Wirkverbindung zu einem Steuerhebel zur Betätigung eines Band-Spannstiftes steht.

4. Vorrichtung nach einem der bisherigen Ansprüche, **dadurch gekennzeichnet**, daß die Ausklinkung (14) an der Steuerscheibe (5) mit einer Einlaufschräge und einer gegenüberliegenden Führungsnase (15) versehen ist.

# FIG. 1

Reg. 2021

# FIG. 2

# FIG. 3